(19) Europäisches Patentamt
European Patent Office
Office européen des brevets

(11) **EP 3 083 360 B1**

(12) **FASCICULE DE BREVET EUROPEEN**

(45) Date de publication et mention
de la délivrance du brevet:
**04.11.2020 Bulletin 2020/45**

(51) Int Cl.:
***B60W 40/068*** *(2012.01)*

(21) Numéro de dépôt: **14827842.7**

(22) Date de dépôt: **15.12.2014**

(86) Numéro de dépôt international:
**PCT/FR2014/053340**

(87) Numéro de publication internationale:
**WO 2015/092246 (25.06.2015 Gazette 2015/25)**

(54) **ESTIMATION DU POTENTIEL D'ADHÉRENCE PAR ÉVALUATION DU RAYON DE ROULEMENT**

SCHÄTZUNG DES HAFTPOTENZIALS DURCH BEURTEILUNG DES ROLLRADIUS

ESTIMATING ADHESION POTENTIAL BY ASSESSING ROLLING RADIUS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2013 FR 1362880**

(43) Date de publication de la demande:
**26.10.2016 Bulletin 2016/43**

(73) Titulaire: **Compagnie Générale des
Etablissements Michelin
63000 Clermont-Ferrand (FR)**

(72) Inventeur: **DUVERNIER, Marc
F-63040 Clermont-Ferrand Cedex 9 (FR)**

(74) Mandataire: **Roussy, Delphine
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**EP-A1- 2 138 372        EP-A2- 0 412 791
US-A- 4 947 332          US-A1- 2008 154 471
US-A1- 2012 173 091**

**Description**

L'invention concerne le domaine des pneumatiques destinés aux véhicules automobiles. Plus particulièrement, l'invention s'intéresse à l'évaluation en temps réel des conditions d'adhérence du véhicule sur le sol, de manière à pouvoir informer le conducteur, ou les systèmes de sécurité embarqués, de modifications des conditions de roulage pouvant entraîner la mise en danger du véhicule et de ses passagers.

Plusieurs systèmes d'estimation de l'adhérence d'un pneumatique sur le sol ont été décrits par le passé.

Les premiers systèmes de mesure du potentiel d'adhérence proposés par les équipementiers sont basés sur les dispositifs antiblocages d'assistance au freinage de type ABS, et sur la régulation anti-patinage des roues motrices de type ESP. Ces dispositifs reconstruisent par calcul, et donc de manière indirecte, le coefficient d'adhérence du pneumatique sur le sol, sans procéder à la mesure des efforts développés dans l'aire de contact.

Plus récemment, le document EP 1 076 235 propose de déterminer le potentiel d'adhérence en mesurant, à l'aide d'un capteur, les efforts tangentiels subis par un élément de sculpture donné, lorsque cet élément de sculpture passe dans l'aire de contact. Toutefois, cette méthode se heurte à la difficulté rencontrée pour positionner et maintenir en état de fonctionnement un capteur disposé dans un élément de sculpture de la bande de roulement, laquelle est particulièrement exposée aux chocs et aux agressions de toutes sortes.

Le document WO03/066399 décrit un procédé de détermination du potentiel d'adhérence d'un pneumatique, ainsi que la marge d'adhérence disponible, en réalisant des mesures, dans un repère lié au véhicule, des variations des distances circonférentielles de points fixes situés à des azimuts différents le long de la circonférence du flanc du pneumatique. Ce procédé nécessite toutefois qu'il existe une zone de glissement importante dans l'aire de contact, et ne va émettre une information pertinente que lorsque le véhicule sera proche de conditions à partir desquelles le pneumatique commence réellement à glisser sur le sol. Cette alerte peut être jugée trop tardive pour être considérée comme une assistance à la conduite. De manière alternative, le document US 2012/0173091 décrit un dispositif d'appréciation du glissement à l'aide de caméras permettant d'évaluer le rayon de roulement.

Dans le repère du pneumatique, on désignera par l'axe OX l'axe représentant la direction circonférentielle du pneumatique, par OY l'axe parallèle à l'axe de rotation du pneumatique ou axe transversal, et par OZ l'axe normal à l'axe de rotation du pneumatique, ou axe radial.

Dans ce qui suit, on définira le coefficient d'adhérence, désigné par la lettre $\mu$, comme le rapport entre les contraintes tangentielles et les contraintes normales appliquées au niveau de l'aire de contact.

On entend ici dans un sens large par contraintes, les contraintes, les forces ou les déformations appliquées en un point donné, étant entendu que ces grandeurs sont reliées entre elles de manière connue.

Le coefficient d'adhérence au niveau de l'aire de contact à un instant donné s'exprimera donc sous la forme :

$$\mu_t = \sqrt{\frac{\sigma_x^2 + \sigma_y^2}{\sigma_z^2}},$$

où $\sigma_x$ représente la contrainte tangentielle selon l'axe X ;
où $\sigma_y$ représente la contrainte tangentielle selon l'axe Y ;
et où $\sigma_z$ représente la contrainte de pression selon l'axe Z, laquelle est sensiblement constante pendant la majeure partie du passage dans l'aire de contact.

Le potentiel d'adhérence $\mu_{max}$ au niveau de l'aire de contact, correspond à la valeur maximale du rapport entre l'effort tangentiel et l'effort normal que le pneumatique peut supporter au cours de son contact avec le sol. Ce potentiel d'adhérence est susceptible de se modifier en fonction de la nature du sol sur lequel roule le véhicule. La différence entre le potentiel d'adhérence $\mu_{max}$ et le coefficient d'adhérence $\mu_t$, correspond, à la marge d'adhérence ($\mu_{max}$ - $\mu_t$) du pneumatique.

L'invention repose sur la mesure et l'analyse du rayon de roulement du pneumatique.

Le rayon de roulement peut se définir comme la distance parcourue au sol lorsque le pneumatique effectue un tour de roue divisée par $2\pi$.

Classiquement, on mesure la valeur du rayon de roulement lorsque, sous l'effet d'un couple moteur important, la roue patine, la distance parcourue par tour de roue est alors plus faible et le rayon de roulement diminue. A l'inverse, lorsque l'on applique un couple freineur, la roue ralentit et, à l'extrême, peut se bloquer, alors que le véhicule continue d'avancer, et le rayon de roulement augmente.

De manière équivalente le rayon de roulement peut se définir comme le rapport entre la vitesse linéaire du véhicule en m/s et la vitesse de rotation de la roue en rad/s, ou encore comme le rapport entre une distance sol parcourue pendant un intervalle de temps donné et la variation angulaire de la roue autour de son axe pendant le même intervalle de temps.

Une observation précise permet de mettre en évidence que le rayon de roulement varie également en roulage libre, c'est-à-dire en l'absence de couple freineur ou de couple moteur, lorsque le potentiel d'adhérence varie.

Il apparaît en effet que les micros glissements localisés entre la bande de roulement et le sol dans l'aire de contact imposent à la roue de tourner légèrement plus vite par rapport à des conditions d'adhérence maximales pour maintenir le véhicule à une vitesse constante.

On constate alors que, par rapport à des conditions d'adhérence maximales, le rayon de roulement baisse lorsque le potentiel d'adhérence du pneumatique sur le sol baisse, et tout se passe comme s'il était nécessaire d'appliquer un couple moteur supplémentaire.

L'invention se propose de mettre à profit cette observation, et de déterminer un potentiel d'adhérence en fonction de l'observation directe de l'évolution du rayon de roulement. Ces variations, de faibles amplitudes, sont néanmoins détectables avec une précision suffisante pour permettre la détermination du coefficient d'adhérence du pneumatique. Cela nécessite également, comme on le verra par la suite, de maitriser avec une faible marge d'erreur les paramètres liés au véhicule et susceptibles d'interagir avec la mesure du rayon de roulement.

La méthode de détermination du potentiel d'adhérence d'un pneumatique roulant sur un sol selon l'invention comporte les étapes au cours desquelles :

- on évalue l'évolution d'un rayon de roulement du pneumatique en fonction de conditions de roulage prédéterminées dudit pneumatique sur des sols d'adhérences variables et connues, pour constituer une base de données expérimentales,
- à partir de la base de données expérimentales, on établit un modèle d'estimation du potentiel d'adhérence en déterminant une fonction reliant le potentiel d'adhérence au rayon de roulement et à des paramètres véhicule,
- en cours de roulage du pneumatique, on détermine le rayon de roulement et, par application dudit modèle, et en fonction des paramètres véhicules, on évalue le potentiel d'adhérence dudit pneumatique.

La détermination du potentiel d'adhérence passe donc par la construction d'un modèle à partir de données expérimentales obtenues dans des conditions de roulage connues et spécifiques d'un pneumatique donné, et par l'application de ce modèle dans les conditions de roulage ordinaires du véhicule.

On observe également que, dans le cadre d'une évaluation rapide, le nombre de paramètres influents peut être relativement limité. La mise en oeuvre de la méthode selon l'invention est également facilitée par le fait que ces paramètres sont aujourd'hui accessibles avec une précision suffisante au travers des moyens de surveillance et d'aide à la conduite installés dans la plupart des véhicules modernes, pour permettre de déterminer le potentiel d'adhérence avec la précision souhaitée.

La méthode selon l'invention peut aussi comprendre isolément ou en combinaison les caractéristiques suivantes :

- on évalue le rayon de roulement en faisant le rapport entre une vitesse de déplacement du véhicule par rapport au sol et une vitesse de rotation de la roue autour de son axe.
- on détermine le rayon de roulement en faisant une moyenne des mesures du rayon de roulement acquises pendant une durée moyenne déterminée.
- la durée moyenne est comprise entre 1 et 10 secondes, et préférentiellement comprise entre 2,5 et 3,5 secondes.
- on détermine le rayon de roulement en évaluant la vitesse de déplacement du véhicule par rapport au sol à l'aide d'un système GPS embarqué dans le véhicule, et la vitesse de rotation de la roue à l'aide d'un codeur générant une pluralité d'impulsions à chaque tour de roue.
- on détermine le rayon de roulement à chaque impulsion générée par ledit codeur.
- on applique le modèle d'estimation du potentiel d'adhérence lorsque le rayon de roulement est inférieur à un seuil prédéterminé.
- le modèle d'estimation ($M_{potad}$) du potentiel d'adhérence ($\mu_{max}$) est de la forme

$$\mu_{max} = a_1 e^{(RRt)} + a_2 Z e^{(RRt)} + a_3 P e^{(RRt)} + a_4 Z + a_5 P + a_6 PZ + a_7$$

où RRt représente le rayon de roulement, Z une charge appliquée sur la roue, P une valeur de pression du pneumatique, et $a_1$, $a_2$, $a_3$, $a_4$, $a_5$, $a_6$, $a_7$, des constantes.

- la valeur de pression du pneumatique est donnée par l'expression :

$$P = P_{TPMS} + a_8\, V_{sol}^2$$

où $P_{TPMS}$ représente une valeur de la pression donnée par un capteur logé à l'intérieur du pneumatique, $V_{sol}$ représente la vitesse de déplacement du véhicule par rapport au sol et $a_8$ une constante.

- on évalue une charge libre appliquée sur la roue en mettant en œuvre les étapes au cours desquelles, lorsque le véhicule n'est pas engagé dans un virage et ne subit pas d'accélération transversale ni longitudinale, et lorsqu'un couple moteur/freineur appliqué sur la roue est nul, et que la roue est dans des conditions de roulage libre :

  ◦ on détecte que le véhicule roule sur un sol sec,
  ◦ on estime la valeur du rayon de roulement et,
  ◦ à l'aide du modèle, on recherche la valeur de la charge libre permettant d'obtenir un potentiel d'adhérence égal à 1.

- pendant toute la durée d'un trajet sur sol sec, on détermine une charge libre moyenne.
- on détermine le potentiel d'adhérence à l'aide du modèle d'estimation sur la base de la mesure du rayon de roulement, de la valeur de pression du pneumatique et de la connaissance de la charge libre ou de la charge libre moyenne.
- on détermine le potentiel d'adhérence à l'aide du modèle d'estimation sur la base de la mesure du rayon de roulement, de la valeur de pression du pneumatique, et d'une charge égale à une charge instantanée appliquée sur la roue et calculée en utilisant une fonction décrivant la dynamique du véhicule à partir de données véhicule à un instant donné comprenant :

  ◦ la charge libre ou la charge moyenne appliquée sur la roue, et/ou
  ◦ un couple moteur ou freineur, et/ou
  ◦ un angle de dérive, et/ou
  ◦ des accélérations transversales et longitudinales et/ou
  ◦ un angle de carrossage.

- on évalue la charge appliquée sur la roue en fonction d'une mesure d'une distance entre un point situé sur un châssis du véhicule et un point situé sur un support de la roue et d'une raideur d'une suspension reliant ledit support audit châssis.
- on détermine le potentiel d'adhérence d'un pneumatique monté sur une roue non directrice et non motrice.

L'invention sera mieux comprise à la lecture des figures annexées, qui sont fournies à titre d'exemples dans le cas d'un véhicule de tourisme et ne présentent aucun caractère limitatif, dans lesquelles :

- La figure 1 représente un plan d'expérience mettant en évidence l'évolution du rayon de roulement en fonction d'une variation du potentiel d'adhérence.
- La figure 2 représente un plan d'expérience similaire au précédent dans des conditions de vitesse de charge et de pression différentes.
- La figure 3 représente la variation du rayon de roulement en fonction du potentiel d'adhérence pour des charges et des pressions différentes.
- La figure 4 représente une distribution des valeurs de potentiel d'adhérence calculées à partir de valeurs de rayon mesurées en fonction d'un potentiel reel d'adhérence donné.
- La figure 5 représente une évolution de la marge d'erreur en fonction du rayon de roulement.
- La figure 6 représente une évolution du calcul du potentiel d'adhérence prédit au cours d'un roulage dans des conditions d'adhérence variables.

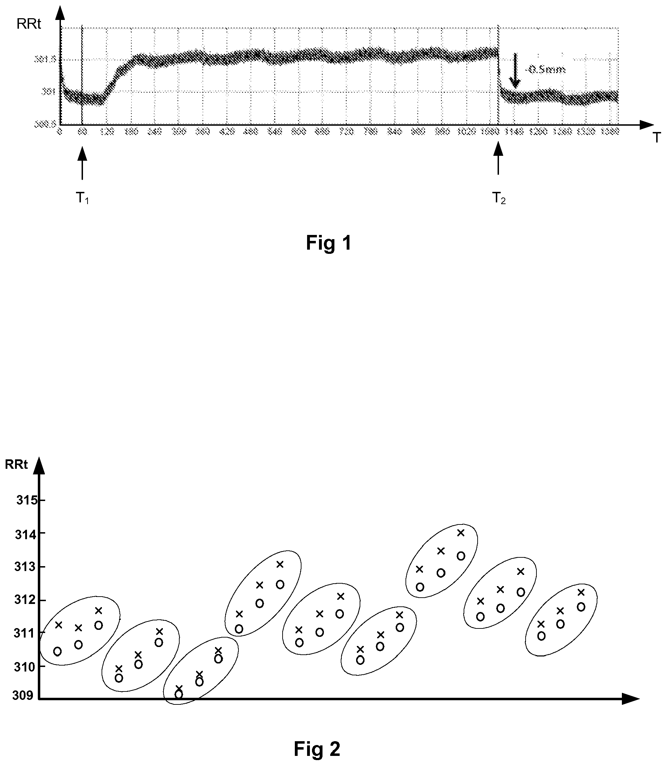

La figure 1 mettant en évidence le phénomène sur lequel repose l'invention, permet de visualiser la mesure de rayon de roulement d'une roue non motrice et non directrice lors du roulage successivement sur un sol mouillé entre 0 et $T_1$, sur un sol sec entre $T_1$ et $T_2$, puis à nouveau sur un sol mouillé au-delà de $T_2$, d'un véhicule roulant en ligne droite à vitesse constante.

On observe que le rayon de roulement RRt augmente de 0,5 mm lorsque l'on passe d'un roulage sur sol mouillé à un roulage sur sol sec, et qu'il diminue de la même valeur lorsque l'on passe d'un sol sec à un sol mouillé.

La figure 2 reproduit ce plan d'expérience pour des vitesses, des conditions de charge de la roue et des pressions de gonflage différentes. On observe encore une variation du rayon de roulement lorsque l'on passe du sol sec (représenté par des croix) au sol mouillé (représenté par des cercles) et réciproquement.

La méthode consiste alors à bâtir une relation entre le rayon de roulement et le potentiel d'adhérence en fonction des paramètres véhicule les plus influents tels que la vitesse, la charge, la pression de gonflage des pneumatiques, le couple freineur ou moteur ou encore les efforts transversaux exercés sur le pneumatique lorsque ce dernier subit un angle de dérive ou un angle de carrossage.

Les paramètres véhicule de premier ordre susceptibles de modifier le rayon de roulement, et donc la détermination du potentiel d'adhérence, sont la charge et la pression du pneumatique. Les efforts longitudinaux liés à l'existence d'un couple freineur ou d'un couple moteur et les efforts transversaux liés à la mise en dérive du pneumatique ou à l'angle de carrossage interviennent seulement pour le calcul de la charge. Ainsi, en considérant que les efforts longitudinaux et transversaux sont quasi nuls, ce qui est le cas lorsque le véhicule n'est pas sollicité par une manœuvre particulière, on peut évaluer le potentiel d'adhérence des pneumatiques, et connaitre ainsi le niveau d'adhérence dont on dispose si le véhicule devait freiner ou prendre un virage à une certaine vitesse.

Pour cette raison, on s'intéressera plus particulièrement à une roue non motrice et non directrice, telle que par exemple une roue arrière sur un véhicule de type traction avant. On vérifiera donc, avant de faire une mesure du rayon de roulement en cours de roulage, que les freins ne sont pas activés, et que l'angle volant est égal à zéro. Ces informations sont en règle générale disponibles à tout moment sur les véhicules modernes équipés de systèmes d'aide à la conduite tels qu'un ESP (Electronic Stability Program).

Selon un mode de réalisation préférentiel, on branche un boîtier sur la prise de diagnostic du véhicule ; ce boîtier peut contenir le système GPS et permet aussi d'accéder aux signaux des systèmes d'aide à la conduite du véhicule notamment le correcteur électronique de trajectoire ou ESP.

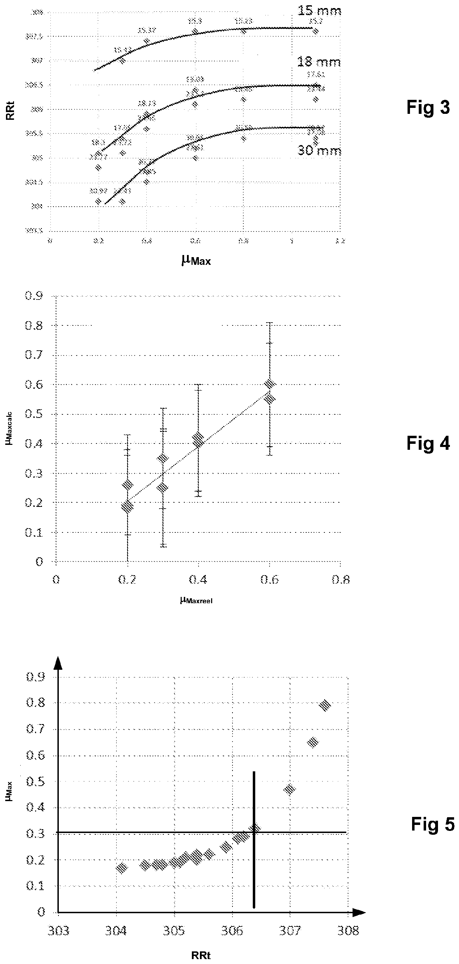

La figure 3 illustre l'évolution du rayon de roulement RRt en fonction de la valeur du potentiel d'adhérence $\mu_{max}$ pour des conditions de charge et de pression différentes représentées par des valeurs de flèches différentes, respectivement pour une flèche de 30 mm, de 18 mm et de 15 mm. La flèche est égale ici à la différence entre le rayon du pneumatique gonflé à l'état libre et le rayon du pneumatique sous charge.

L'ensemble des données mesurées expérimentalement permet alors de déterminer un modèle $M_{potad}$ mettant en relation le potentiel d'adhérence $\mu_{max}$ avec le rayon de roulement en fonction de la charge et de la pression. Ces mesures sont effectuées à des vitesses comprises entre 30 km/h et 110 km/h.

Le modèle $M_{potad}$ obtenu est de la forme générale :

$$\mu_{max} = a_1 e^{(RRt)} + a_2 Z e^{(RRt)} + a_3 P e^{(RRt)} + a_4 Z + a_5 P + a_6 PZ + a_7$$

où Z représente la charge supportée par le pneumatique, P représente une valeur de pression du pneumatique, et les valeurs $a_1$, $a_2$, $a_3$, $a_4$, $a_5$, $a_6$, $a_7$, représentent des coefficients déterminés expérimentalement.

On observe que le potentiel d'adhérence à une incidence d'autant plus forte sur le rayon de roulement que ce potentiel est faible.

La précision de la détermination du potentiel d'adhérence va alors dépendre de la précision de mesure de la valeur du rayon de roulement, mais également de la connaissance précise de la valeur de la pression et de la charge appliquée sur la roue et de la pression régnant dans le pneumatique. Plus spécifiquement, la variation du rayon de roulement se fait dans une plage de quelques dixièmes de millimètres, et impose donc que l'évaluation de cette valeur soit faite avec une marge d'erreur sous contrôle.

La détermination du rayon de roulement s'effectue de manière simple en faisant le ratio entre la vitesse de déplacement du véhicule par rapport au sol ($V_{sol}$), et la vitesse de rotation $\Omega$ de la roue autour de son axe.

$$RRt = V_{sol}/\Omega$$

La vitesse sol $V_{sol}$ est par exemple obtenue à partir des données recueillies par le système de navigation par satellite GPS avec une précision de 0,1 km/h.

La mesure de la vitesse de rotation ($\Omega$) de la roue autour de son axe peut se faire à l'aide du codeur de roue utilisé par le système antiblocage des roues (ABS), et produisant typiquement 196 impulsions par tour de roue.

Il est possible d'améliorer la précision du calcul du rayon de roulement en effectuant une moyenne des rayons de roulement mesurés sur une durée moyenne prédéterminée. Une durée moyenne de 3 secondes permet d'obtenir une marge d'erreur acceptable. Il semble toutefois nécessaire de limiter cette durée moyenne à une dizaine de secondes de manière à ne pas pénaliser le temps de mise à disposition d'une information sur le potentiel d'adhérence, et pour se prémunir des conséquences d'une évolution rapide des conditions de roulage.

Le rayon de roulement est alors calculé à chaque impulsion du codeur de roue. Ainsi, pour une durée moyenne de 3 secondes à une vitesse de 90 km/h, on estime le rayon de roulement 7350 fois, et on peut atteindre une précision sur la détermination du rayon de roulement de l'ordre de +/- 0,15 mm avec un intervalle de confiance de 95%.

De manière alternative, il est possible de mesurer une distance (d) parcourue pendant un temps donné, et de mesurer la variation angulaire (a) de la roue pendant le même intervalle de temps. Le rayon de roulement est obtenu en faisant le rapport entre ces deux valeurs : RRt =d/a

Les données de charge et de pression sont des paramètres véhicule qui ne sont pas normalement susceptibles de varier fortement pendant un trajet déterminé. On entend ici par trajet, le parcours effectué par le véhicule entre deux arrêts du véhicule ou entre deux arrêts du moteur.

La pression du pneumatique est obtenue en faisant l'acquisition des données issues du capteur de pression logé dans le pneumatique (TPMS). Et il est possible d'atteindre une précision de l'ordre de 0,1 bar avec un intervalle de confiance de 95%.

De manière à prendre en compte certains effets liés à la centrifugation, la pression peut être corrigée en fonction de la vitesse de la manière suivante :

$$P = P_{TPMS} + a_8 \ V_{sol}^2$$

où $P_{TPMS}$ représente la pression mesurée par le capteur de pression logé dans le pneumatique, $V_{sol}$ représente la vitesse du véhicule par rapport au sol, et $a_8$ un coefficient déterminé expérimentalement.

La détermination de la charge Z peut se faire de plusieurs manières.

Une première manière, directe, consiste à mesurer une variation de distance entre un point fixe du châssis du véhicule et un point du support de la roue. On en déduit la charge en prenant en compte la raideur de la suspension reliant le support de la roue au châssis. Cette méthode reste néanmoins tributaire des variations instantanées dues aux irrégularités de la chaussée, et nécessite de filtrer les données acquises.

Une autre méthode consiste à se servir du modèle $M_{potad}$ de prédiction de l'adhérence dans des conditions particulières, en faisant une hypothèse sur la valeur du potentiel d'adhérence et en recherchant la valeur de la charge $Z_{libre}$ donnant cette valeur sur la base du rayon de roulement et de la pression mesurés en cours de roulage dans les conditions explicitées ci-dessus.

Cette hypothèse est facilement vérifiable lorsque le véhicule roule sur un sol sec et que le potentiel d'adhérence est en règle générale égal ou supérieur à 1. On peut s'assurer de cette condition à l'aide par exemple d'un détecteur acoustique du bruit engendré par le pneumatique en roulant, ou encore en se servant de l'information relative à l'activation ou à la désactivation des essuie-glaces.

On détecte ensuite que la roue ne subit pas de couple freineur ni moteur en observant par exemple la pédale de frein ou d'accélérateur et que le véhicule n'est pas engagé dans un virage et ne subit pas d'accélérations transversales ni longitudinales, ce qui peut se vérifier par exemple à l'aide d'accéléromètres disposés dans le véhicule ou en observant l'angle de la direction; la roue est dans des conditions de roulage libre. On mesure alors le rayon de roulement et la pression du pneumatique dans les conditions énoncées ci-dessus. Puis, en appliquant le modèle de détermination du potentiel d'adhérence $M_{potad}$, on recherche la charge $Z_{libre}$ donnant un potentiel d'adhérence égal à 1.

Cette mesure peut être réalisée autant de fois que nécessaire pendant que le véhicule roule sur sol sec, de manière à obtenir une charge libre moyenne $Z_{libremoy}$ calculée avec un bon intervalle de confiance.

Cette méthode permet de déterminer la charge portée par la roue avec une précision de l'ordre de +/-50 daN et un intervalle de confiance de 95%. Cette valeur de charge libre, ou de charge libre moyenne qui varie peu au cours d'un même trajet, est alors enregistrée pour servir de base à des calculs ultérieurs, en particulier dans le cas où le véhicule rencontrerait au cours de ce trajet des conditions de roulage sur un sol humide ou glissant. Après avoir vérifié que le couple freineur ou moteur appliqué sur la roue est nul et que le véhicule n'est pas engagé dans un virage et ne subit pas d'accélérations transversales et/ou longitudinales, on applique le modèle de détermination du potentiel d'adhérence $M_{potad}$ en considérant que la valeur de la charge Z est égale à la charge libre $Z_{libre}$ ou à la charge libre moyenne $Z_{libremoy}$, dont la valeur est immédiatement disponible sans faire appel à des calculs supplémentaires.

De manière complémentaire, on peut aussi déterminer sur la base de la charge libre $Z_{libre}$, ou de la charge libre moyenne $Z_{libremoy}$, une valeur de la charge instantanée $Z_{inst}$ prenant en compte les sollicitations transversales et longitudinales imposées à la roue. Il est alors nécessaire d'acquérir des informations supplémentaires, lorsqu'elles sont disponibles sur le BusCAN du véhicule, telles que l'accélération transversale ou longitudinale, le couple moteur ou freineur, l'angle volant ou l'angle de dérive, l'angle de carrossage, et d'appliquer un modèle dynamique propre au véhicule permettant de calculer la charge instantanée $Z_{inst}$ appliquée sur la roue.

Le boitier précédemment indiqué branché sur la prise de diagnostic du véhicule peut permettre d'accéder aisément et périodiquement à ces informations.

Ces modèles, bien connus de l'homme du métier, ne font pas partie de la présente invention et peuvent être élaborés à partir des publications effectuées à titre d'exemple dans "Fundamentals of vehicle dynamics", 1992 par T.D. GILLESPIE, dans "Les liaisons au sol" 1995 par T.HALCONRUY, ou encore dans "A new tyre model for vehicle dynamics simulations" par BAYLE, FORISSIER et LAFON" de la société formulant la présente demande, sur la base du modèle proposé par PACEJKA.

On détermine alors à l'aide du modèle $M_{potad}$ un potentiel d'adhérence $\mu_{max}$ représentatif des conditions de roulage instantanées du pneumatique.

Avec les précisions de mesure annoncées, on estime le potentiel d'adhérence avec une précision de l'ordre de +/- 0,2 avec un intervalle de confiance de 95 %.

La figure 4, permet d'apprécier la dispersion de l'évaluation du potentiel d'adhérence calculé $\mu_{maxcalc}$ en fonction du potentiel d'adhérence réel $\mu_{maxreel}$

On observe que cette dispersion est plus grande pour des valeurs de potentiel d'adhérence $\mu_{max}$ élevées. C'est-à-dire, lorsque le véhicule roule dans des conditions éloignées des conditions susceptibles de le mettre en danger. Et que la précision augmente pour les valeurs de $\mu_{max}$ plus faibles, ce qui permet d'obtenir l'information la plus juste lorsque le véhicule aborde des terrains plus glissants.

La figure 5 illustre de la même manière l'évolution de la précision de la valeur du potentiel d'adhérence prédit à l'aide du modèle en fonction du rayon de roulement. Cette erreur est croissante avec le rayon de roulement et avec le potentiel d'adhérence. Les plus fortes erreurs correspondent à la situation dans laquelle la flèche est la plus faible c'est-à-dire lorsque la pression est forte et/ou la charge faible. Ces cas sont rares en usage réel.

Aussi, pour améliorer la fiabilité de la détection, il peut s'avérer intéressant de limiter l'application du modèle aux configurations dans lesquelles le rayon de roulement est inférieur à un seuil déterminé, telles que typiquement l'erreur d'ajustement est inférieure par exemple à 0,3. Dans le cas illustré à la figure 5, on limitera donc l'usage du modèle à des rayons de roulement inférieurs à 306,5mm.

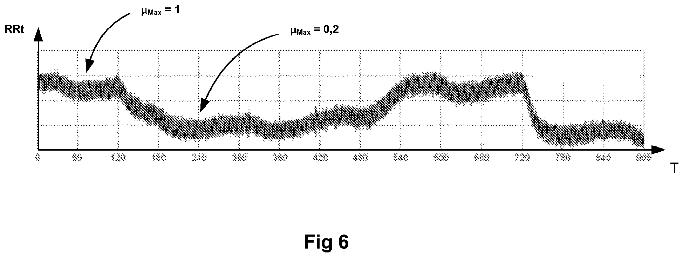

La figure 6 illustre un enregistrement de la valeur du rayon de roulement $\mu_{max}$ mesurée au cours d'un roulage sur un sol présentant des coefficients d'adhérence variables pendant un trajet de 15 minutes. Au début de l'enregistrement, le sol présente une forte adhérence ($\mu_{max}$ = 1) ; au bout de deux minutes les conditions d'adhérence décroissent fortement ($\mu_{max}$ = 0,2) et le rayon de roulement aussi.

La méthode proposée permet donc d'obtenir une information fiable sur l'évolution du potentiel d'adhérence, dont la connaissance est indispensable à la sécurité des véhicules, en prenant en compte un phénomène agissant directement sur ce paramètre.

Les modes de réalisation de l'invention servant de base à la présente description ne sont donc pas limitatifs, et peuvent faire l'objet comme on l'a vu de variantes de mise en œuvre, pour autant qu'elles permettent d'obtenir les effets techniques tels que décrits et revendiqués.

La méthode de l'invention a été illustrée dans le cas de pneumatiques de véhicules de tourisme, mais s'applique aussi à tout autre type de pneumatique notamment pour véhicules agricoles, poids-lourds, deux roues et génie-civil.

## Revendications

**1.** Méthode de détermination d'un potentiel d'adhérence ($\mu_{max}$) d'un pneumatique monté sur une roue d'un véhicule roulant sur un sol, comportant les étapes au cours desquelles :

- on évalue l'évolution d'un rayon de roulement (RRt) du pneumatique en fonction de conditions de roulage prédéterminées dudit pneumatique sur des sols d'adhérences variables et connues, pour constituer une base de données expérimentales,
- à partir de la base de données expérimentales, on établit un modèle d'estimation du potentiel d'adhérence ($M_{potad}$) en déterminant une fonction reliant le potentiel d'adhérence ($\mu_{max}$) au rayon de roulement (RRt) et à des paramètres véhicule,
- en cours de roulage du pneumatique, on détermine le rayon de roulement (RRt) et, par application dudit modèle ($M_{potad}$), et en fonction des paramètres véhicules, on évalue le potentiel d'adhérence ($\mu_{max}$) dudit pneumatique.

**2.** Méthode selon la revendication 1, dans laquelle on évalue le rayon de roulement (RRt) en faisant le rapport entre une vitesse de déplacement du véhicule par rapport au sol ($V_{sol}$) et une vitesse de rotation ($\Omega$) de la roue autour de son axe (RRt = $V_{sol}/\Omega$).

**3.** Méthode selon la revendication 2, dans laquelle on détermine le rayon de roulement (RRt) en faisant une moyenne des mesures du rayon de roulement (RRt) acquises pendant une durée moyenne déterminée.

**4.** Méthode selon la revendication 3, dans laquelle la durée moyenne est comprise entre 1 et 10 secondes, et préférentiellement comprise entre 2,5 et 3,5 secondes.

**5.** Méthode selon la revendication 4, dans laquelle on détermine le rayon de roulement (RRt) en évaluant la vitesse de déplacement du véhicule par rapport au sol ($V_{sol}$) à l'aide d'un système GPS embarqué dans le véhicule, et la

vitesse de rotation ($\Omega$) de la roue à l'aide d'un codeur générant une pluralité d'impulsions à chaque tour de roue.

6. Méthode selon la revendication 5, dans laquelle on détermine le rayon de roulement (RRt) à chaque impulsion générée par ledit codeur.

7. Méthode selon l'une des revendications 1 à 6, dans laquelle on applique le modèle d'estimation du potentiel d'adhérence ($M_{potad}$) lorsque le rayon de roulement (RRt) est inférieur à un seuil prédéterminé.

8. Méthode selon l'une des revendications 1 à 7, dans laquelle le modèle d'estimation ($M_{potad}$) du potentiel d'adhérence ($\mu_{max}$) est de la forme :

$$\mu_{max} = a_1 e^{(RRt)} + a_2 Z e^{(RRt)} + a_3 P e^{(RRt)} + a_4 Z + a_5 P + a_6 PZ + a_7$$

où RRt représente le rayon de roulement, Z une charge appliquée sur la roue, P une valeur de pression du pneumatique, et $a_1$, $a_2$, $a_3$, $a_4$, $a_5$, $a_6$, $a_7$, des constantes.

9. Méthode selon la revendication 8, dans laquelle la valeur de pression du pneumatique (P) est donnée par l'expression :

$$P = P_{TPMS} + a_8\ V_{sol}^2$$

où $P_{TPMS}$ représente une valeur de la pression donnée par un capteur logé à l'intérieur du pneumatique, $V_{sol}$ représente la vitesse de déplacement du véhicule par rapport au sol et $a_8$ une constante.

10. Méthode selon la revendication 8 ou la revendication 9, dans laquelle on évalue une charge libre ($Z_{libre}$) appliquée sur la roue en mettant en œuvre les étapes au cours desquelles, lorsque le véhicule n'est pas engagé dans un virage et ne subit pas d'accélération transversale ni longitudinale, et lorsqu'un couple moteur/freineur appliqué sur la roue est nul, et que la roue est dans des conditions de roulage libre :

   - on détecte que le véhicule roule sur un sol sec,
   - on estime la valeur du rayon de roulement (RRt) et,
   - à l'aide du modèle ($M_{potad}$), on recherche la valeur de la charge libre ($Z_{libre}$) permettant d'obtenir un potentiel d'adhérence égal à 1.

11. Méthode selon la revendication 10, dans laquelle, pendant toute la durée d'un trajet sur sol sec, on détermine une charge libre moyenne ($Z_{libremoy}$).

12. Méthode selon la revendication 10 ou la revendication 11, dans laquelle on détermine le potentiel d'adhérence ($\mu_{max}$) à l'aide du modèle d'estimation ($M_{potad}$) sur la base de la mesure du rayon de roulement (RRt), de la valeur de pression du pneumatique (P) et de la connaissance de la charge libre ($Z_{libre}$) ou de la charge libre moyenne ($Z_{libremoy}$).

13. Méthode selon la revendication 10 ou la revendication 11, dans laquelle on détermine le potentiel d'adhérence ($\mu_{max}$) à l'aide du modèle d'estimation ($M_{potad}$) sur la base de la mesure du rayon de roulement (RRt), de la valeur de pression du pneumatique (P), et d'une charge (Z) égale à une charge instantanée ($Z_{inst}$) appliquée sur la roue et calculée en utilisant une fonction décrivant la dynamique du véhicule à partir de données véhicule à un instant donné comprenant :

   - la charge libre sur la roue ($Z_{libre}$) ou la charge moyenne ($Z_{libremoy}$), et/ou
   - un couple moteur ou freineur, et/ou
   - un angle de dérive, et/ou
   - des accélérations transversales et longitudinales et/ou
   - un angle de carrossage.

14. Méthode selon la revendication 8 ou la revendication 9, dans laquelle on évalue la charge (Z) en fonction d'une mesure d'une distance entre un point situé sur un châssis du véhicule et un point situé sur un support de la roue, et d'une raideur d'une suspension reliant ledit support audit châssis.

15. Méthode selon l'une des revendications 1 à 15, dans laquelle on détermine le potentiel d'adhérence ($\mu_{max}$) d'un pneumatique monté sur une roue non directrice et non motrice.


**Patentansprüche**

1. Verfahren zum Bestimmen eines Haftvermögens ($\mu_{max}$) eines Luftreifens, der an einem Rad eines Fahrzeugs montiert ist, das auf einem Untergrund rollt, das die folgenden Schritte umfasst:

   - Bewerten der Änderung eines Rollradius (RRt) des Luftreifens als Funktion von vorgegebenen Rollbedingungen des Luftreifens auf Böden mit unterschiedlichen und bekannten Haftungen, um eine experimentelle Datenbasis zu bilden,
   - anhand der experimentellen Datenbasis Erstellen eines Modells zum Schätzen des Haftvermögens ($M_{potad}$) durch Bestimmen einer Funktion, die das Haftvermögen ($\mu_{max}$) mit dem Rollradius (RRt) und mit Fahrzeugparametern in Beziehung setzt,
   - während des Rollens des Luftreifens Bestimmen des Rollradius (RRt) und durch Anwenden des Modells ($M_{potad}$) und als Funktion von Fahrzeugparametern Bewerten des Haftvermögens ($\mu_{max}$) des Luftreifens.

2. Verfahren nach Anspruch 1, wobei der Rollradius (RRt) dadurch bewertet wird, dass das Verhältnis zwischen einer Verlagerungsgeschwindigkeit des Fahrzeugs in Bezug auf den Untergrund ($V_{sol}$) und einer Drehgeschwindigkeit ($\Omega$) des Rades um seine Achse gebildet wird (RRt = $V_{sol}/\Omega$).

3. Verfahren nach Anspruch 2, wobei der Rollradius (RRt) dadurch bestimmt wird, dass ein Mittelwert von Messwerten des Rollradius (RRt), die während einer bestimmten mittleren Dauer erfasst werden, gebildet wird.

4. Verfahren nach Anspruch 3, wobei die mittlere Dauer im Bereich von 1 bis 10 Sekunden und vorzugsweise im Bereich von 2,5 bis 3,5 Sekunden liegt.

5. Verfahren nach Anspruch 4, wobei der Rollradius (RRt) dadurch bestimmt wird, dass die Verlagerungsgeschwindigkeit des Fahrzeugs in Bezug auf den Untergrund ($V_{sol}$) mit Hilfe eines GPS-Systems an Bord des Fahrzeugs und die Drehgeschwindigkeit ($\Omega$) des Rades mit Hilfe eines Drehgebers, der bei jeder Umdrehung des Rades mehrere Impulse erzeugt, bewertet wird.

6. Verfahren nach Anspruch 5, wobei der Rollradius (RRt) bei jedem von dem Drehgeber erzeugten Impuls bestimmt wird.

7. Verfahren nach einem der Ansprüche 1 bis 6, wobei das Modell ($M_{potad}$) zum Schätzen des Haftvermögens angewendet wird, wenn der Rollradius (RRt) kleiner als ein vorgegebener Schwellenwert ist.

8. Verfahren nach einem der Ansprüche 1 bis 7, wobei das Modell ($M_{potad}$) zum Schätzen des Haftvermögens ($\mu_{max}$) die folgende Form hat:

$$\mu_{max} = a_1 e^{(RRT)} + a_2 Z e^{(RRT)} + a_3 P e^{(RRt)} + a_4 Z + a_5 P + a_6 PZ + a_7$$

wobei RRt den Rollradius bezeichnet, Z eine auf das Rad ausgeübte Last bezeichnet, P einen Druckwert des Luftreifens bezeichnet und $a_1$, $a_2$, $a_3$, $a_4$, $a_5$, $a_6$ und $a_7$ Konstanten sind.

9. Verfahren nach Anspruch 8, wobei der Druckwert (P) des Luftreifens durch den folgenden Ausdruck gegeben ist:

$$P = P_{TPMS} + a_8 V_{sol}^2$$

wobei $P_{TPMS}$ einen Wert des Drucks angibt, der durch einen Sensor gegeben wird, der in dem Luftreifen enthalten

ist, $V_{sol}$ die Verlagerungsgeschwindigkeit des Fahrzeugs in Bezug auf den Untergrund angibt und $a_8$ eine Konstante ist.

10. Verfahren nach Anspruch 8 oder Anspruch 9, wobei eine freie Last ($Z_{libre}$), die auf das Rad ausgeübt wird, bewertet wird, indem die Schritte ausgeführt werden, in denen dann, wenn das Fahrzeug keine Kurve fährt und weder einer Quer- noch einer Längsbeschleunigung unterliegt, und dann, wenn ein auf das Rad ausgeübtes Antriebs-/Bremsdrehmoment gleich null ist und wenn das Rad Bedingungen eines freien Rollens unterliegt:

   - detektiert wird, dass das Fahrzeug auf einem trockenen Untergrund rollt,
   - der Wert des Rollradius (RRt) geschätzt wird und
   - mit Hilfe des Modells ($M_{potad}$) der Wert der freien Last ($Z_{libre}$) gesucht wird, was ermöglicht, ein Haftvermögen gleich 1 zu erhalten.

11. Verfahren nach Anspruch 10, wobei während der gesamten Dauer einer Bahn auf trockenem Untergrund eine mittlere freie Last ($Z_{libremoy}$) bestimmt wird.

12. Verfahren nach Anspruch 10 oder Anspruch 11, wobei das Haftvermögen ($\mu_{max}$) mit Hilfe eines Modells ($M_{potad}$) zum Schätzen auf der Grundlage der Messung des Rollradius (RRt), des Druckwertes (P) des Luftreifens und der Kenntnis der freien Last ($Z_{libre}$) oder der mittleren freien Last ($Z_{libremoy}$) bestimmt wird.

13. Verfahren nach Anspruch 10 oder Anspruch 11, wobei das Haftvermögen ($\mu_{max}$) bestimmt wird mit Hilfe eines Modells ($M_{potad}$) zum Schätzen anhand der Messung des Rollradius (RRt), des Druckwerts (P) des Luftreifens und einer Last (Z), die gleich einer momentanen Last ($Z_{inst}$) ist, die auf das Rad ausgeübt wird und unter Verwendung einer Funktion berechnet wird, die die Dynamik des Fahrzeugs anhand von Fahrzeugdaten zu einem gegebenen Zeitpunkt beschreibt, die Folgendes umfassen:

   - die freie Last ($Z_{libre}$) auf das Rad oder die mittlere Last ($Z_{libremoy}$) und/oder
   - ein Antriebs- oder Bremsdrehmoment und/oder
   - einen Driftwinkel und/oder
   - Quer- und Längsbeschleunigungen und/oder
   - einen Radsturzwinkel.

14. Verfahren nach Anspruch 8 oder Anspruch 9, wobei die Last (Z) als Funktion eines Messwerts eines Abstands zwischen einem Punkt, der sich an einem Chassis des Fahrzeugs befindet, und einem Punkt, der sich an einem Radträger befindet, und einer Steifigkeit einer Aufhängung, die den Träger mit dem Chassis verbindet, bewertet wird.

15. Verfahren nach einem der Ansprüche 1 bis 15, wobei das Haftvermögen ($\mu_{max}$) eines Luftreifens, das an einem nicht lenkbaren und nicht angetriebenen Rad montiert ist, bestimmt wird.

**Claims**

1. Method for determining an adhesion potential ($\mu_{max}$) of a tyre mounted on a wheel of a vehicle travelling over ground, including the steps during which:

   - the evolution of a rolling radius (RRt) of the tyre as a function of predetermined rolling conditions of said tyre on ground of variable and known adhesion is evaluated to construct an experimental database,
   - based on the experimental database, an estimation model of the adhesion potential ($M_{adpot}$) is established by determining a function linking the adhesion potential ($\mu_{max}$) to the rolling radius (RRt) and to vehicle parameters,
   - the rolling radius (RRt) is determined while the tyre is rolling and the adhesion potential ($\mu_{max}$) of said tyre is evaluated by application of said model ($M_{adpot}$) and as a function of the vehicle parameters,.

2. Method according to Claim 1, wherein the rolling radius (RRt) is evaluated by establishing the ratio between a speed of movement of the vehicle relative to the ground ($V_{sol}$) and a speed ($\Omega$) of rotation of the wheel about its axis (RRt $= V_{sol}/\Omega$).

3. Method according to Claim 2, wherein the rolling radius (RRt) is determined by averaging measurements of the rolling radius (RRt) acquired during a particular mean period.

4. Method according to Claim 3, wherein the mean period is between 1 and 10 seconds inclusive and preferably between 2.5 and 3.5 seconds inclusive.

5. Method according to Claim 4, wherein the rolling radius (RRt) is determined by evaluating the speed of movement of the vehicle relative to the ground ($V_{sol}$) using a GPS system onboard the vehicle and the rotation speed ($\Omega$) of the wheel using a coder generating a plurality of pulses on each wheel revolution.

6. Method according to Claim 5, wherein the rolling radius (RRt) is determined on each pulse generated by said coder.

7. Method according to any one of Claims 1 to 6, when the estimation model ($M_{adpot}$) of the adhesion potential is applied when the rolling radius (RRt) is below a predetermined threshold.

8. Method according to any one of Claims 1 to 7, wherein the estimation model ($M_{adpot}$) of the adhesion potential ($\mu_{max}$) is of the form:

$$\mu_{max} = a_1 e^{(RRt)} + a_2 Z e^{(RRt)} + a_3 P e^{(RRt)} + a_4 Z + a_5 P + a_6 PZ + a_7$$

where RRt represents the rolling radius, Z a load applied to the wheel, P a tyre pressure value, and $a_1$, $a_2$, $a_3$, $a_4$, $a_5$, $a_6$, $a_7$ are constants.

9. Method according to Claim 8, wherein the tyre pressure value (P) is given by the expression:

$$P = P_{TPMS} + a_8 V_{sol}^2$$

where $P_{TPMS}$ represents a value of the pressure given by a sensor accommodated inside the tyre, $V_{sol}$ represents the speed of movement of the vehicle relative to the ground and $a_8$ is a constant.

10. Method according to Claim 8 or 9, wherein a free load ($Z_{free}$) applied to the wheel is evaluated by carrying out the steps during which, when the vehicle is not engaged in a turn and is not subject to any transverse or longitudinal acceleration, when a zero drive/braking torque is applied to the wheel, and when the wheel is under free rolling conditions:

- it is detected that the vehicle is rolling on a dry ground,
- the value of the rolling radius (RRt) is estimated, and
- using the model ($M_{adpot}$), the value of the free load ($Z_{free}$) making it possible to obtain an adhesion potential equal to 1 is looked for.

11. Method according to Claim 10, wherein a mean free load ($Z_{meanfree}$) is determined throughout travel over dry ground.

12. Method according to Claim 10 or Claim 11, wherein the adhesion potential ($\mu_{max}$) is determined using the estimate model ($M_{adpot}$) on the basis of the measurement of the rolling radius (RRt), the tyre pressure value (P) and the known free load ($Z_{free}$) or the mean free load ($Z_{meanfree}$).

13. Method according to Claim 10 or Claim 11, wherein the adhesion potential ($\mu_{max}$) is determined using the estimation model ($M_{adpot}$) on the basis of the measurement of the rolling radius (RRt), the tyre pressure value (P), and a load (Z) equal to an instantaneous load ($Z_{inst}$) applied to the wheel and calculated using a function defining the dynamic of the vehicle on the basis of vehicle data at a given moment comprising:

- the free load ($Z_{free}$) on the wheel or the mean load ($Z_{meanfree}$), and/or
- a drive or braking torque, and/or
- a drift angle, and/or
- transverse and longitudinal accelerations, and/or
- a camber angle.

14. Method according to Claim 8 or Claim 9, wherein the load (Z) is evaluated as a function of a measurement of a distance between a point situated on a chassis of the vehicle and a point situated on a support of the wheel and a stiffness of a suspension connecting said support to said chassis.

15. Method according to any one of Claims 1 to 15, wherein the adhesion potential ($\mu_{max}$) of a tyre mounted a non-steered and non-driving wheel is determined.

**Fig 1**

**Fig 2**

**Fig 3**

**Fig 4**

**Fig 5**

Fig 6

**EP 3 083 360 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1076235 A
- WO 03066399 A
- US 20120173091 A

**Littérature non-brevet citée dans la description**

- **T.D. GILLESPIE.** *Fundamentals of vehicle dynamics,* 1992
- **T.HALCONRUY.** *Les liaisons au sol,* 1995
- **BAYLE ; FORISSIER ; LAFON.** *A new tyre model for vehicle dynamics simulations*